Europäisches Patentamt

European Patent Office

Office européen des brevets

(11) Publication number: **0 043 396**
**A1**

## EUROPEAN PATENT APPLICATION

(21) Application number: **80302321.7**

(22) Date of filing: **09.07.80**

(51) Int. Cl.³: **G 01 S 13/93,** G 01 S 15/93

(43) Date of publication of application: **13.01.82**
**Bulletin 82/2**

(84) Designated Contracting States: **AT BE CH DE FR GB IT LI LU NL SE**

(71) Applicant: **Burling, Geoffrey Thomas, 53 Paternoster Hill, Waltham Abbey Essex (GB)**
Applicant: **Dods, Richard Victor, Warren View Mardens Hill, St. Johns Crowborough East Sussex (GB)**

(72) Inventor: **Burling, Geoffrey Thomas, 53 Paternoster Hill, Waltham Abbey Essex (GB)**
Inventor: **Dods, Richard Victor, Warren View Mardens Hill, St. Johns Crowborough East Sussex (GB)**

(74) Representative: **Wisher, Michael Frederick, Urquhart-Dykes & Lord 47 Marylebone Lane, London W1M 6DL (GB)**

(54) A distance indicating system.

(57) A distance indicating system, particularly for a vehicle, includes a transmitter (8) to transmit a signal beam, and two receivers (10) and (12) one on either side of the transmitter (8) The transmitter and the receivers are mounted on the front of a vehicle, and if an object (24) is directly in front of the vehicle the transmitted signal beam will be reflected by the object (24) and received simultaneously by the receivers (10) and (12). A coincident gate (16) is actuated only in response to signals received simultaneously by the receivers (10) and (12), and the actuated gate (16) sends an output signal to an echo delay measuring circuit (18). This circuit (18) operates an audio tone generator (20) and an audio output indicator (22) thereby providing an aural warning for the vehicle driver of the presence of the object (24). A clock (14) switches the transmitter (8) and the receivers (10) and (12) on and off in a suitable sequence to prevent a transmitted signal being passed directly from the transmitter (8) to the receivers (10) and (12) and being passed to the coincident gate (16). The audio output (22) is not operated in response to signals reflected from objects to the left or right of the vehicle because the reflected signals do not arrive simultaneously at the receivers (10) and (12), and consequently the coincident gate (16) is not actuated.

- 1 -

## TITLE

"A Distance Indicating System"

### TECHNICAL FIELD

The present invention relates to a distance indicating system, and is particularly concerned with but not restricted to a distance indicating system for a vehicle. In this Specification the term "vehicle" is intended to include any construction which can move on, over or under land or water, and would, for example, include a vehicle generally known as a hovercraft which is suspended on an air cushion.

### BACKGROUND ART

A major cause of road accidents is the fact that a road vehicle is travelling too near to the vehicle immediately in front. It sometimes occurs that a vehicle inadvertently approaches too near to a vehicle in front because the visibility is poor, or because the driver is momentarily distracted.

### STATEMENT OF INVENTION AND ADVANTAGES

It is an aim of the invention to alleviate this difficulty, and according to the present invention there is provided a distance indicating system comprising a transmitter to transmit a signal beam, a receiver to receive said beam when reflected from an object, and an indicator to provide an indication of the strength of the reflected beam and/or the time delay between sending and receiving a signal.

The system of the invention can utilise any suitable type of transmitted signal such as for example, electro-magnetic radiation, as used for radio communication, ultra-violet or infra-red radiation, and pressure waves of any frequency such as those for example which cover sound waves or ultrasonic waves. Similarly, the indicator can provide any suitable form of indication, although it is envisaged that for a vehicle an aural indication would be preferable.

When the system is used in connection with road vehicles it is intended that the transmitted beam will be made highly directional to increase the accuracy of the system. The required parameters of the system will of course vary in accordance with the visibility existing during use. In consequence, a preferred system of the invention may be designed to operate under either of the two following conditions:-

1. At any vehicle speed during any visibility conditions. This operational condition will be particularly useful when motoring in poor visibility where danger of a collision can occur even at low speeds.

2. In normal visibility conditions, in which the system is arranged to switch off at speeds below a preselected value. For example, on a clear day the driver may decide to switch off the system at speeds below 30 miles per hour because he feels that he can safely rely on his own eye sight and speed of reaction.

## FIGURES IN THE DRAWINGS

Embodiments of the invention will now be described by way of example with reference to the accompanying illustrative drawings in which:-

FIGURE 1 is a diagrammatic illustration of two vehicles with the rear vehicle using the system of the invention;

FIGURE 2 is a block schematic diagram of one system of the invention;

FIGURE 3 is a block schematic diagram of another system of the invention; and

FIGURE 4 is a block schematic diagram of a further system of the invention.

## DETAILED DESCRIPTION OF DRAWINGS

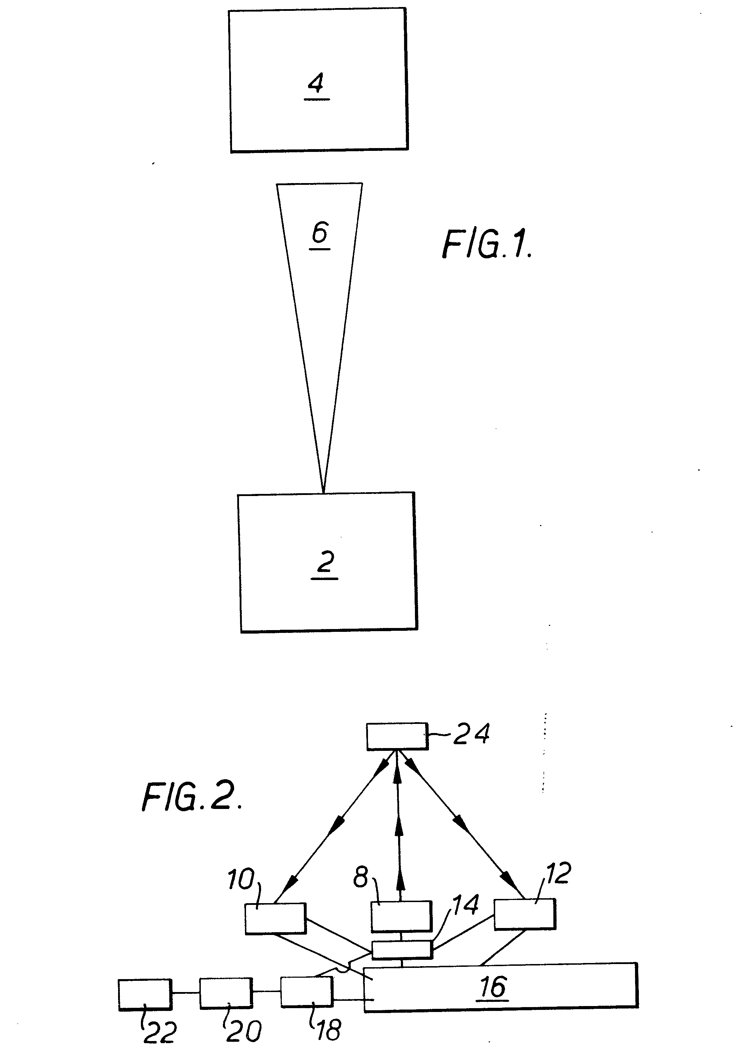

Referring to Figure 1, a vehicle 2 carrying an indicating system of the invention is travelling behind a vehicle 4. The system includes a transmitter which transmits a beam 6 of electro-magnetic radiation, a receiver and an indicating buzzer which is operated when the receiver receives electro-magnetic radiation at a strength above a preselected value.

In order that the system can provide an accurate indicating of the distance between the vehicles 2 and 4, the beam 6 is highly directional. For example, the beam illustrated in the drawing has a spread or width of approximately 1.5 feet at a distance of 75 feet from the transmitter. This beam is transmitted directly in front of the vehicle 2, at a height of approximately 1.5 feet from the surface of the road 8. The aforementioned directionality of the beam 6 ensures that the beam will impinge only on a vehicle directly in front of the vehicle 2, and will not be scattered onto objects on either side of the vehicle 2.

The transmitter is mounted at a lower central part of the front of the vehicle 2, and the buzzer is located in the vehicle cabin, preferably on the dash board. The receiver is located near to the buzzer, and can be either in the cabin or immediately in front of the dash board underneath the bonnet.

0043396

In operation, the transmitter transmits the beam 6 forwardly from the vehicle 2 to impinge upon a vehicle 4 immediately in front of the vehicle 2. A beam is reflected from metal parts of the vehicle 4, and this reflected beam is received by the receiver in the vehicle 2. The system is calibrated so that the receiver operates the buzzer if the strength of the reflected beam received at the receiver is above a preselected value. Obviously the strength of the reflected beam received at the receiver is dependent upon the distance between the vehicles 2 and 4, and in one system of the invention the system is calibrated so that the buzzer is operated if the distance between the vehicles 2 and 4 is less than 75 feet. In this way, the driver of the vehicle 2 receives a warning of the proximity of the vehicle 4, and is able to reduce speed accordingly.

It will be appreciated that the system may be calibrated to operate the buzzer for any selected separation distance between the vehicles 2 and 4. Although the transmitter and receiver can be energised from any suitable source, for convenience this transmitter and receiver will be energised from the vehicle battery. The transmitter and receiver will utilise standard circuitry including transistors and consequently their power requirements will be well within the capability of a conventional vehicle battery.

Although a buzzer or other aural indicator is preferable to provide an immediate warning to the vehicle driver, if desired a visual indicator, such as a flashing light on the dash board could be used.

Referring to Figure 2, another embodiment of the invention includes an ultrasonic transmitter 8 and two ultrasonic receivers 10 and 12 mounted on the front of a vehicle. The transmitter is mounted on the vehicle front, and the two receivers 10 and 12 are mounted one on either side of the central transmitter 8.  The transmitter 8 and the receivers 10 and 12 are controlled by a clock 14, and the outputs of the receivers 10 and 12 are fed to respective inputs of a coincident gate 16.  The output of the gate 16 is coupled to an echo delay measuring circuit 18 which is itself coupled to an audio tone generator 20.  An audio output indicator 22 for the vehicle driver is connected to the output of the generator 20.  The receivers 10 and 12 are located approximately four foot apart.

In operation, the clock 14 switches off the receivers 10 and 12, switches on the transmitter 8 for a period of 0.5 milliseconds i.e. 1/200 th of a second, and then switches off the transmitter 8.  The clock 14 then switches on the receivers 10 and 12 within a time period of up to 20 milliseconds after the start of the transmitted ultrasonic pulse. The time delay between switching on the transmitter and the receivers can be varied by the driver of the vehicle.  The transmitted pulse travels at approximately 1100 feet per second in air, and as the receivers 10 and 12 are four feet apart   - the transmitted pulse will have travelled past the receivers in four milliseconds.  In consequence, the receivers 10 and 12 can detect the transmitted pulse only if it is reflected back to the receivers, from an object 24 in front of the vehicle, and only if the receivers have been switched on by the clock 14.  The time interval between the transmitted pulse leaving the transmitter 8 and arriving at the receivers 10 and 12 will of course be dependent upon the distance between the transmitter 8 and the object 24 i.e. a vehicle, reflecting the transmitted pulse back to the receivers 10 and 12.

Reflected pulses received by the receivers 10 and 12 are passed to the coincident gate 16 which produces an output signal only if reflected pulses are received simultaneously by the receivers 10 and 12. Only transmitted pulses reflected from an object 24 directly in front of the transmitter 8 will be received simultaneously by both receivers 10 and 12, and consequently the coincident gate 16 is actuated in response only to an object such as a vehicle immediately in front of the transmitter 8. This means that the distance indicating system is not actuated by signals reflected from objects to the left or right of the transmitter 8 or by random reflections from drops of rain, insects of the like. If desired, the width of the transmitted beam can be widened by increasing the length of the transmitted pulse. The normal transmitted pulse length is less than 1/200th of a second duration.

In operation, the transmitter 8 transmits a burst of ultrasonic sound at a frequency of 40KHZ for a duration of 0.5 milliseconds, and this burst travels at a speed of approximately 1100 feet per second. The receivers 10 and 12 are switched on at least 4 milliseconds after the end of the aforementioned transmitted signal burst. The period between the commencement of the transmitted burst and the switching on of the receivers 10 and 12 can be varied by the operator. By the time the receivers 10 and 12 have been switched on, the rear end of the transmitted burst has travelled a distance of at least four feet, and the burst will not be detected by the receivers 10 and 12 unless it is reflected back by an object 24 in front of the transmitter 8. An object five feet in front of the transmitter 8 will receive the transmitted burst after a period of 5 milliseconds and reflect at least some of this transmitted burst back five feet to the receivers 10 and 12. The time taken for the transmitted burst to travel from the receiver 8 to the object 24 and be reflected back to the receivers 10 and 12 is approximately 10 milliseconds. If the receivers 10 and 12 are switched on 14 milliseconds after the commencement of the transmitted signal burst then these receivers will not pass on received reflected signals or echos to the coincident gate 16. With the aforementioned time period of 14 milliseconds between switching on the transmitter 8 and the receivers 10 and 12, echo only from objects more than 5.5 feet away from the transmitter 8 will be passed by the receivers 10 and 12 to the coincident gate 16. The speed of sound in air is 1100 feet per second, and by measuring the time taken between transmitting the signal from the transmitter 8 and receiving the reflected echo at the receivers 10 and 12 it is possible to determine the distance of the object 24 from the transmitter 8. This distance can be indicated by a suitable meter or preferably by a tone of suitably varied pitch. For example, a system may be arranged so that if there is no received echo then of course there is no tone; a received echo from an adjacent object produces a high pitch or high volume tone, and a received echo from a more distant object produces a lower pitch or lower volume tone.

If the transmitted signal consists of pulses having a pulse repetition rate of nine pulses per second, then each pulse can travel a distance of approximately 120 feet i.e. 60 feet from the transmitter 8 to the object 24 and 60 feet back to the receivers 10 and 12, and still be received before the receivers 10 and 12 are switched off for the transmission of the next transmitted pulse. If an echo is returned to the receivers 10 and 12 after travelling for example 150 feet then this echo would be picked up by the receivers 10 and 12 when switched on after a second pulse has been transmitted from the transmitter 8.

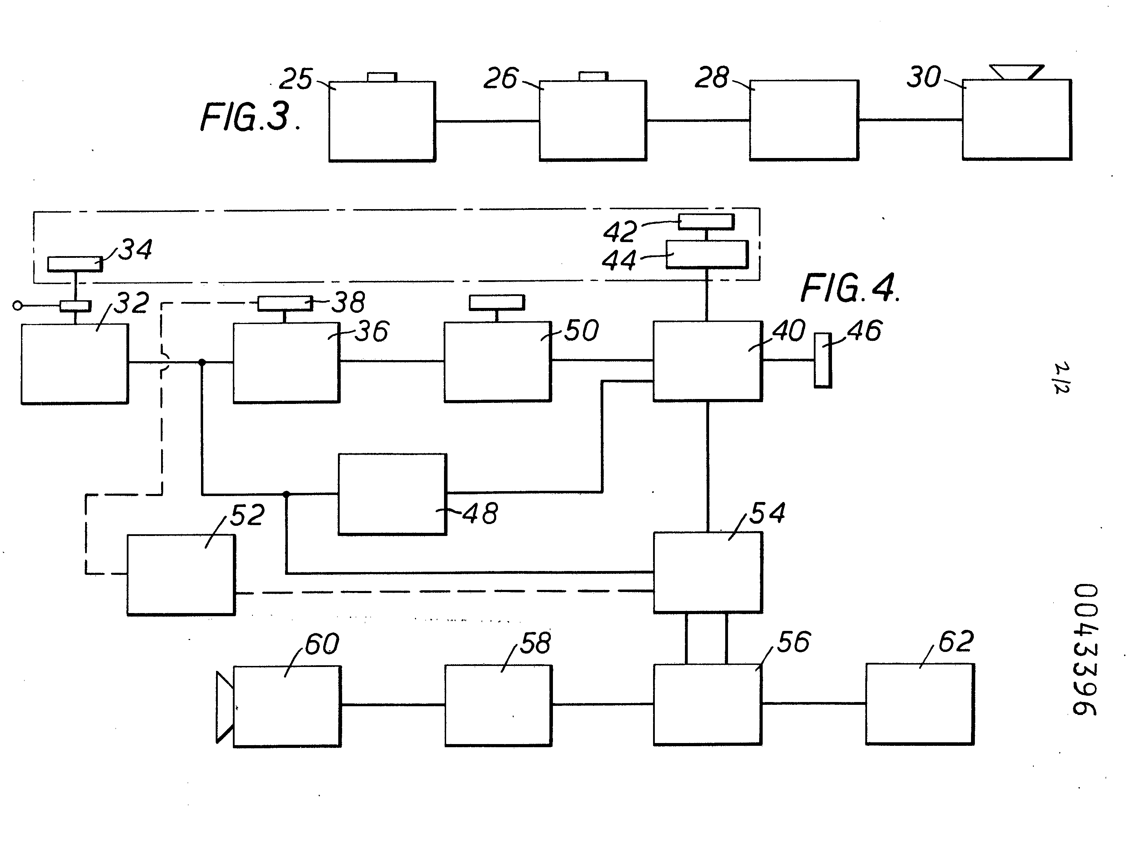

Figure 3 is a block schematic diagram of a basic distance indicating system for a vehicle. The system includes a transmitter 25 arranged to transmit pulses at a repetition rate of 9 pulses per second with each pulse having a duration of 0.5 milliseconds. A receiver 26 is arranged to be switched off when the transmitter 25 is on, and switched on in a time period range of from up to 20 milliseconds after the transmitter 25 is switched off. The time interval between switching off the transmitter 25 and switching on the receiver 26 can be controlled by the vehicle driver. An audio sound generator 28 is responsive to echos or reflected signals received by the receiver 26. This audio sound generator 28 actuates a driver audio warning 30.

Figure 4 is a more detailed block schematic diagram of a distance indicating system of the invention. Referring to Figure 4, the system is intended for use on a vehicle, and includes a transmitter 32. The transmitter 32 comprises an electrical oscillator which is coupled to a transducer 34 which converts the electrical oscillations from the oscillator to a directional beam of ultrasonic sound directed in front of the vehicle. The frequency at which the transmitter 32 is switched on and off is controlled by a clock 36, and the switching rate of this clock 36 is controlled and varied by a device 38. The system includes a receiver 40 for receiving pulses from the transmitter 32 which have been reflected from an object in front of the vehicle. This receiver 40 includes a transducer 42 to convert ultrasonic received echos into electrical signals, a preamplifier 44 to amplify the converted electrical signals, and a sensitivity control 46. A switch 48 ensures that the receiver 40 is switched off when the transmitter 32 is switched on. A time delay control 50 ensures that the receiver 40 is switched on at any desired instant in a time period range of from up to 20 milliseconds after the transmitter 32 is switched off.

0043396

The pulse repetition rate of the transmitter 32 can be automatically increased by a control 52 when the distance between the vehicle and an object falls below a preselected level. The time delay between the transmission of a pulse from the transmitter 32 and the reception of an echo at the receiver 40 is determined by a delay indicator 54 which passes a signal to an audio generator 56 if the aforementioned time delay is less than a preselected value. This means that the audio generator 56 receives a signal only if an object is less than a preselected distance from the vehicle. The output signal from the audio generator 56 is passed through an audio output 58 to a loud speaker 60 to provide an aural warning for the vehicle driver of the presence of the object.

In the aforementioned system, the delay indicator 54 is adjusted by the driver to pass an output signal to the audio generator 56 only if an object is greater than a preselected distance from the vehicle. Alternatively the delay indicator 54 can be adjusted to produce an output signal only if the distance of the object from the vehicle is decreasing. In this case the amplitude of the output signal increases with the rate of decrease of the distance between the vehicle and the object. If desired, the pulse repetition rate of the transmitter 32 can be automatically increased by an information control 62 for near objects.

Although the above description specifies a transmitted signal of ultrasonic sound at a frequency of 40KHZ pulsed, the transmitted signal could be of any other suitable frequency or form of such as for example 2KHZ, 25KHZ, 100KHZ or 200KHZ or more.

It is to be clearly understood that the system of the invention can use any suitable form of transmitted signals such as for example low frequency sound, or infra-red light when pulsed.

In addition, it is envisaged that the transmitted signal could be in the form of relative changes in air pressure or turbulance, or radiated reflected or absorbed heat in the infra-red or any other part of the spectrum. Different objects would respond to different parts of the spectrum in different ways, and any one or more of the aforementioned possible systems could be combined to give a suitable indication. It is also to be understood that the system of the invention is not restricted to providing an aural warning for the driver. Any other suitable warning, such as a flashing light could be used.

With the aforementioned systems using an ultrasonic signal it is possible also to predict a collision by indicating the rate of decrease of the distance between the vehicle and an object immediately in front of the vehicle. One way of achieving this is by comparing the delay period between transmitted and corresponding received echo pulses. If the delay period progressively decreases then the object is getting nearer to the vehicle with a constant risk of collision. The greater the rate of decrease of the delay period between consecutive pulses the greater the approach or collision speed between the vehicle and the object. This information can be presented to the driver by producing a tone whose pitch differs in response to the distance between the vehicle and the object. For example, if the received tone progressively increases its pitch then the vehicle is approaching an object and the approach or collision speed is proportional to the rate of increase of pitch. If the vehicle and the object are travelling at approximately the same speed then the driver's warning tone would be of constant pitch, or could be silent and warn only if the separation distance is decreasing.

Another way of providing a collision warning is to measure the change in frequency of the reflected echo signal with respect to the transmitted signal using what is known as the "Doppler" effect.

- 11 -

## CLAIMS

1.    A distance indicating system comprising a transmitter to transmit a signal beam, a receiver to receive said beam when reflected from an object, and an indicator to provide an indication of the strength of the reflected beam and/or the time delay between sending and receiving a signal.

2.    A system as claimed in Claim 1, including timing means for switching off the receiver when the transmitter is on, and vice versa.

3.    A system as claimed in Claim 1 or Claim 2, in which the indicator comprises an audio tone generator.

4.    A system as claimed in Claim 3, in which the indicator includes a loud speaker actuable by said audio tone generator.

5.    A system as claimed in Claim 3 or Claim 4, in which the frequency of the generated audio tone is dependent upon the strength of the received signal.

6.    A system as claimed in any one of Claims 3 to 5, including a delay means operable to pass a received signal to the audio tone generator only if the received signal delay is less than a preselected or previous level.

7.    A system as claimed in any preceding Claim, including means to vary the time period between switching off the transmitter and switching on the receiver.

8.    A system as claimed in any preceding Claim, in which the transmitter and receiver each include a transducer to convert electrical signals to ultrasonic radiation and vice versa.

9.     A system as claimed in any preceding Claim, in which the transmitter is adapted to transmit pulses.

10.     A system as claimed in Claim 9, including means automatically to increase the pulse repetition rate of the transmitted pulses when the distance between the transmitter and object is less than a preselected value.

11.     A system as claimed in any preceding Claim, including means to indicate the time taken for a transmitted signal to be received.

12.     A system as claimed in any preceding Claim, including a plurality of receivers, and a coincident gate to actuate the indicator only if a reflected signal is received simultaneously by said receivers.

13.     A system as claimed in Claim 12, including two receivers one on either side of the transmitter.

0043396

1/2

FIG.1.

FIG.2.

**FIG.3.**

25 26 28 30

**FIG.4.**

34 42 44 32 38 36 50 40 46 48 52 54 60 58 56 62

00433396

## DOCUMENTS CONSIDERED TO BE RELEVANT

| Category | Citation of document with indication, where appropriate, of relevant passages | Relevant to claim |
|---|---|---|
| X | FR - A - 1 587 907 (SAUXEL)<br><br>* Figures 1-3; page 1, line 38 - page 2, line 33; page 3, line 11 - page 4, line 32; page 6, lines 8-22; page 7, line 17 - page 8, line 2 *<br><br>-- | 1,2,8, 9,11, 12 |
| X | FR - A - 2 191 129 (L.C.T.)<br><br>* Figures 1-3; page 1, lines 1-4; page 2, line 18 - page 5, line 19 *<br><br>& GB - A - 1 433 048<br><br>-- | 1,2,6, 7,9 |
| X | FR - A - 2 105 124 (MITSUBISHI)<br><br>* Figures 1,3; page 1, line 1 - page 3, line 24; page 4, line 7 - page 5, line 16; page 8, line 19 - page 12, line 34 *<br><br>-- | 1,2-4, 7-9,11 |
| X | DE - A - 2 045 368 (MITSUBISHI)<br><br>* Figure 1; page 1, lines 1-5; page 4, line 14 - page 6, line 9 *<br><br>-- | 1,2-4, 7-9,11 |
| X | US - A - 3 360 775 (E.W. SCHROE-DER)<br><br>* Figures 1,2; column 1, lines 9-12; column 2, lines 7-60; column 3, lines 3-49; column 4, line 65 - column 6, line 52 * | 1,3-5, 8-11 |

./

**CLASSIFICATION OF THE APPLICATION (Int. Cl.³)**

G 01 S 13/93
15/93

**TECHNICAL FIELDS SEARCHED (Int. Cl.³)**

G 01 S

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 19-02-1981 | CANNARD |

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | <u>US - A - 3 442 347</u> (R.W. HODGSON et al.)<br><br>  * Figures 1-5; column 1, lines 14-61; column 6, line 54 - column 12, line 58 * | 1,3,4 8 | |
| X | <u>US - A - 3 860 923</u> (TERUO YAMA- NAKA et al.)<br><br>  * Figures 1A,2,3; column 1, line 43 - column 2, line 22; column 3, line 9 - column 5, line 55 * | 1,6 | |
| | <u>US - A - 3 716 822</u> (YASUO TSURUTA)<br><br>  * Figures 1,2; column 1, lines 3-11; column 1, line 47 - column 3, line 59 * | 1,3,4 8,12, 13 | TECHNICAL FIELDS SEARCHED (Int. Cl. 3) |
| | <u>US - A - 3 394 342</u> (P.H. WALKER)<br><br>  * Figures 1,10; column 1, line 10 - column 3, line 7; column 3, line 35 - column 4, line 48; column 10, lines 42-71 * | 1,8,9 12,13 | |
| | <u>US - A - 2 841 782</u> (K. McILWAIN)<br><br>  * Figures 1,2; column 1, lines 17-23; column 2, line 14 - column 4, line 16 * | 1,12, 13 | |

EPO Form 1503.2  06.78